(19) Europäisches Patentamt

European Patent Office

Office européen des brevets

(11) **EP 0 961 279 B1**

(12) **EUROPEAN PATENT SPECIFICATION**

(45) Date of publication and mention
of the grant of the patent:
**13.10.2004 Bulletin 2004/42**

(51) Int Cl.⁷: **G11B 27/32**, G09B 5/06,
G11B 19/02

(21) Application number: **99201606.3**

(22) Date of filing: **21.05.1999**

(54) **Record carrier, apparatus and method**

Aufzeichnungsträger, - gerät und -verfahren

Support d'enregistrement, appareil et méthode

(84) Designated Contracting States:
**DE FR GB**

(30) Priority: **26.05.1998 EP 98201732**

(43) Date of publication of application:
**01.12.1999 Bulletin 1999/48**

(73) Proprietor: **Koninklijke Philips Electronics N.V.**
**5621 BA Eindhoven (NL)**

(72) Inventor: **Schylander, Erik Christian**
**Prof. Holstlaan 6, 5656 AA Eindhoven (NL)**

(74) Representative: **Faessen, Louis Marie Hubertus**
**Philips**
**Intellectual Property & Standards**
**P.O. Box 220**
**5600 AE Eindhoven (NL)**

(56) References cited:
**EP-A- 0 403 118**  **EP-A- 0 542 377**
**EP-A- 0 614 188**  **EP-A- 0 677 842**
**EP-A- 0 689 206**  **EP-A- 0 737 980**
**EP-A- 0 749 124**  **EP-A- 0 788 094**
**WO-A-97/08893**  **WO-A-98/09290**
**US-A- 5 607 356**  **US-A- 5 671 411**

• **APPELRATH H -J:**
**"BILDPLATTEN-NAVIGATIONS- UND**
**-RETRIEVALSYSTEME" TECHNISCHE**
**RUNDSCHAU TRANSFER, vol. 79, no. 11, 13**
**March 1987 (1987-03-13), pages 74-79,**
**XP000052363**

**Description**

The invention pertains to a method of using a record carrier storing at least video-related user data and control data in digital form, which control data enable playback control of the user data, which control data comprises at least play control data which defines user data items which are playable, at least selection control data for enabling the user to select and control reproduction of user data and at least variable control data comprising at least one instruction for an arithmetical operation on user and system variables.

The invention further pertains to an apparatus capable of reproducing user-data under control of control data, the user data and the control data being stored in digital form on a record carrier, which user data comprises at least video data, which control data comprises at least play control data which defines user data items which are playable and at least selection control data for enabling the user to select and control reproduction of user data items, which control data further comprise variable control data comprising at least one instruction for an arithmetical operation on user and system variables, which apparatus is provided with control means comprising a processor controllable by said control data.

The invention further pertains to a method of reproducing user-data under control of control data, according to which method the user data and the control data are read from a record carrier on which these data are stored in digital form, which user data comprises at least video data, which control data comprises play control data, selection control data and variable control data, according to which method user data items are played under control of the play control data, according to which method the selection control data enables the user to select and control reproduction of user data items, according to which method the variable control data comprises at least one instruction for an arithmetical operation on user and system variables.

Such a record carrier, apparatus and method are known from WO 98/09290. The play control data in the form of Play Lists enables the record and/or playback device to reproduce the user data in a predetermined order. Apart from video data, the user data may contain for example audio data, and data giving information about the video and/or audio data. The selection control data, in the form of Selection Lists enable the user to make a selection out of the available Play Lists by giving input to the apparatus. In addition the known apparatus can process variable control data by performing arithmetical operations and logical tests. The variable control data enables the apparatus a further way of controlling the playback of user data at the record carrier dependent of the history of user input.

In the known record carrier the variable control data comprises a Statement List which describes operations on variables and a Conditional List which describes conditional jumps.

It is a purpose of the invention to provide means which enable more simple variable control.

For this purpose the invention provides a method of using a record carrier according to claim 1, an apparatus according to claim 5 and a method of reproducing according to claim 7.

The invention is based on the insight that for interactive playback of audio/visual data, the choice of what is to be played back depends on many parameters, such as the current user input, the history of user input, the region of playback etc. A plurality of the operations necessary for playback control is therefore performed conditionally. As the apparatus of the invention is adapted to be controlled by variable control data wherein the at least one instruction comprises a logical test from which the outcome controls the execution of the arithmetical operation, the variable control data can be concise so that less memory space is required and variable control is simplified.

The conditional arithmetical operations are for example addition, subtraction, multiplication, division and modulo calculation. Whether the arithmetic operations specified in the instruction are performed depends on the outcome of a logical test.

In the record carrier used with the invention, the variable control data can be clearly structured. Operations which are to be performed conditionally can be arranged in the same sequence as other operations.

Such a way of control is very suitable for educational purposes: According to instructions in the variable control data the processor can evaluate the progress of the user, for example by evaluating results of user responses upon questions presented by the apparatus.

Depending on the outcome of the evaluation the system can select an educational session to continue with.

In a favorable embodiment the record carrier is characterized in that, the instructions are embedded in Command Lists which further comprise a Command List Header which precedes the instruction and an unconditional goto which succeeds the instruction, and which refers to a next List (e.g. another Command List, a Play List or a Selection List).

It is preferred that each Command List comprises only one instruction apart from the unconditional goto.

This embodiment is advantageous if the record carrier is to be played by an apparatus of the invention in which the same processor which interprets the play control data and the selection control data also interprets the variable control data. The header enables the processor to recognize the type of control data. The unconditional goto instruction passes control to a next List, which may be either a Command List, or for example a Play List, which forms play control data or a Selection List which forms selection control data.

Otherwise the apparatus of the invention can have separate processors for interpreting the variable control data and the other control data. The processors can for example communicate with each other via variables which are stored in a common memory.

These and other aspects of the invention are described with reference to the drawing. Therein:

Figure 1 shows an embodiment of an apparatus in accordance with the invention,
Figure 2 shows the syntax of an embodiment of a Play List,
Figure 3 shows the syntax of an embodiment of a Selection List,
Figure 4 shows the syntax of an embodiment of a Command List,
Figure 5 shows the syntax of possible instructions for the Command List,
Figure 6 and 7 show the semantics of the conditional portion of these instructions,
Figure 8 shows the syntax of the portion representing arithmetical operations,
Figure 9 shows an example of a combination of Play Lists, Selection Lists and Command Lists.

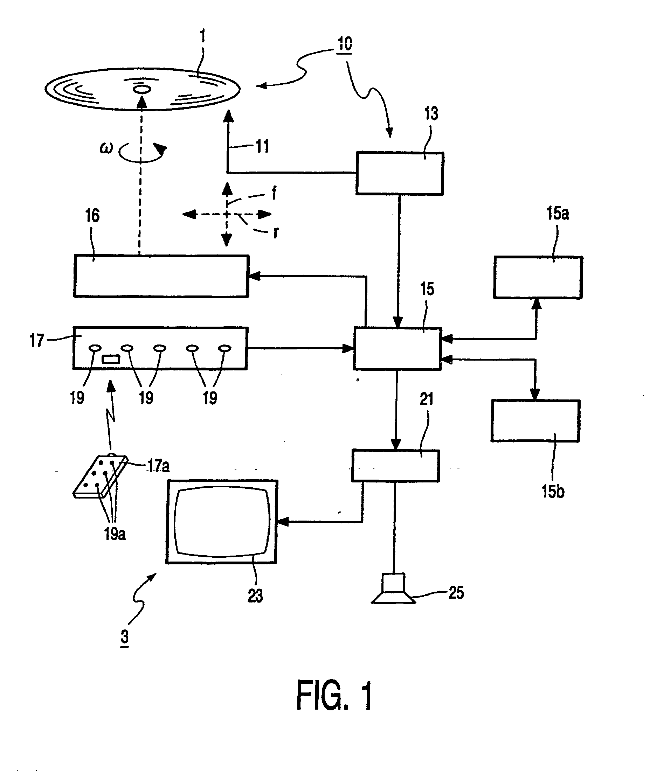

Figure 1 shows a system 10 comprising an apparatus 3 and a record carrier 1 in accordance with the invention. The apparatus is capable of reproducing user-data under control of control data, the user data and the control data being stored in digital form on the record carrier 1. The record carrier 1 is e.g. an optical disc comprising digital audio/ video/data information in an embossed information layer.

This information is to be read out by use of an optical stylus 11 (known as such) which supplies the detected data to a decoding and error correcting means 13. The decoded and error corrected data are supplied to a processor 15, which cooperates with a ROM memory 15a and a RAM memory 15b to control and operate on the data flow received from decoding and error correcting means 13. A first task of the controller 15 is to provide control signals, such as velocity control tracking and focusing control signals to the servo system 16. The servo system 16 controls the angular velocity ω of the rotating disc 1 as well as the position of the optical stylus 11 with respect to the track of the optical disc 1, which has been shown by the dotted arrow r. Further the servo system 16 controls the focusing of the optical stylus, such that the bright bundle emitted by the laser is focused on the information layer of the optical disc (which has been shown by the dotted arrow f).

A second task of the processor 15 is to control the audio and video bit stream to the dedicated decoders 21, which decode the e.g. MPEG2 coded video and audio and supply the decoded video to a display 23 and the decoded audio to a speaker or speaker system 25 (e.g. a multi channel sound system).

The information to be reproduced by the display 23 and sound system 25 is selectable by user input, which is received e.g. by direct control of selection buttons 19 of the input means 17 of the optical disc player 3 or via a remote control device 17a having selection buttons 19a. Of course, other possibilities of control are available and adequate, such as but not limited to: voice control, control via a direct link to a personal computer or via a telephone modem etc.

The processor 15 of the shown embodiment can be a relatively low power microcontroller having 1 MIPS (million instructions per second) capacity. It is possible to have the video and audio MPEG2 decoding realized by a software controlled processor 15, which then should be a high speed high power process unit equipped with adequate amounts of RAM and ROM memory 15a and 15b.

The control data stored by the record carrier comprises at least play control data, here in the form of Play Lists, which defines user data items which are playable (also denoted as Play Items), for example a plurality of user data items which are playable in sequence. The control data further comprises selection control data, here in the form of Selection Lists, for enabling the user to select and control reproduction of user data items. The control data further comprises variable control data, in the form of Command Lists, defining operations on user and system variables. A more detailed description is given below. Therein hexadecimal numbers are preceded by a $ and binary numbers are preceded by a %.

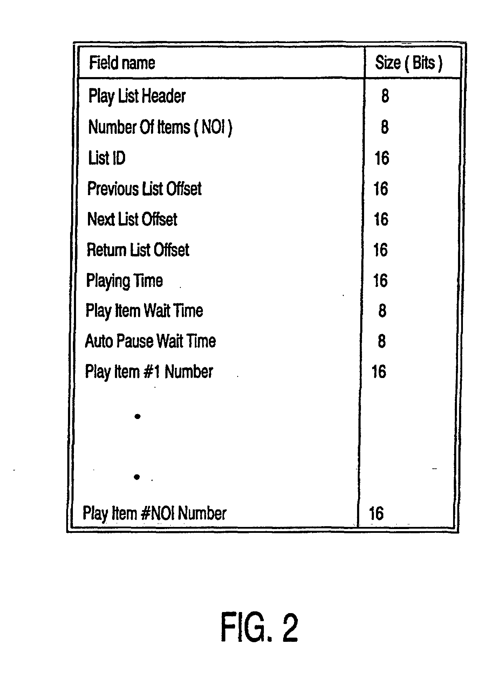

The syntax of the Play List is shown in Figure 2. The semantics of the entries therein are as follows:

**The Play List Header** is a code which identifies the beginning of the Play List, in this example having the value $10.
The **Number Of Items (NOI)** gives the number of Play Items in this Play List. The minimum value of NOI is 1.
The **List ID** gives the List ID Number. Preferably the List ID Number is unique among all Lists on the record carrier.
The **Previous List Offset** contains a reference to the List that is to be interpreted on execution of a "PREVIOUS" function. Preferably that List is the List which would be reproduced before the current Play List when reproducing the contents of the record carrier in default order, so that the effect of the "PREVIOUS" function corresponds to the intuitive notion that the user has of this function.
The **Next List Offset** contains a reference to the List that is to be interpreted after interpretation of the current Play List is completed. Interpretation of the List referred to in the Next List Offset may also be realized immediately by execution of the "NEXT" function.
The **Return List Offset** contains a reference to the List that is to be interpreted when a "RETURN" function is executed. The "RETURN" function gives the user control at a higher hierarchical level. The user may for example have selected the current Play List out of number of selections comprised in a Selection List (described below). In that case execution of the "RETURN" function during interpretation of the current Play List has the effect that control is passed to the said Selection List.

**Playing Time** defines the time to play from each Play Item of this Play List starting from the beginning of the Play Item. In practice the time to play can not exceed the duration of any Play Item. The value of this entry can be set to $0000 to achieve that the Play Items are played completely. The value of this entry may be modified during interpretation of the current Play List, so as to achieve that Play Items have a mutually different playing time.

The **Play Item Wait Time** defines the wait time after playing each Play Item. The wait may be interrupted by a user interaction function. The value of this entry may be modified during interpretation of the current Play List, so as to achieve different waiting times between the Play Items. The waits may be terminated by a user interaction function (e.g. the "NEXT" function).

**Auto Pause Wait Time** is the wait time at Auto Pause. If a sector is played in which an Auto Pause flag is set, the wait time after play back of the Play Item is finished is the Auto Pause Wait Time instead of the Play Item Wait Time. Likewise this wait time may be interrupted by a user interaction.

The entry **Play Item #n,** represents the identification number of a Play Item. The said number may for example directly refer to a track containing a Play Item or to an entry in a table containing a reference to such a track. The Play Item is for example the whole or part of an MPEG Audio/Video Track, or MPEG encoded Still Pictures with optional MPEG Audio, or MPEG audio without image data.

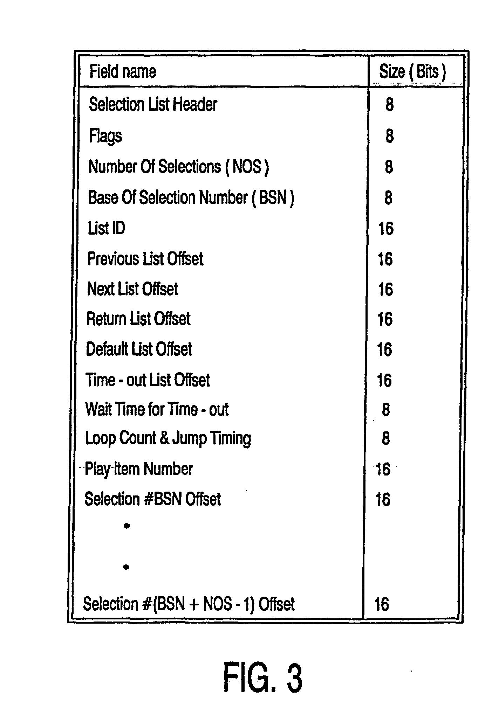

The syntax of the Selection List is shown in Figure 3. The semantics of the entries are as follows:

The **Selection List Header** identifies the beginning of the Selection List and equals $18 in this example.
The 8-bit field **Flags** can contain a plurality of flags. In this case each of the bits in the field represents a flag. One flag indicates for example whether Selection Area Fields are present.
These Fields contain additional date for use with selection systems that use screen pointing devices. The additional data comprises e.g. coordinates of a rectangular region at the screen which is to be pointed at with the pointing device in order to execute a particular function or to select from a number of options.
The **Number Of Selections (NOS)** gives the number of selections which this List enables.
The **Base Of Selection Number (BSN)** indicates the first selection number of this List.
The definition of the **List ID** is analogous to that of the Play List.
**Previous List Offset:** See the definition of Previous List Offset of the Play List.
The **Next List Offset** is the reference to the List that is interpreted on execution of the NEXT function
**Return List Offset**: See the definition of Return List Offset of the Play List.
The field **Default List Offset** contains an offset to the List which is interpreted upon execution of a "Default Selection" function. With this function the user may indicate that he has no preference for a particular selection for example by striking an arbitrary key not corresponding to a selection.
**Time-out List Offset** gives a reference of a List that is interpreted after Time out i.e. if the wait-time has expired and no user interaction has taken place.
**Wait Time for Time-out** gives the duration for time-out.
**Play Item Number** defines the Play Item to be reproduced when the present Selection List is interpreted. The Play Item is for example a menu indicating the possible options.
**Loop Count & Jump Timing** specifies the number of times that the Play Item specified in the field Play Item Number is to be repeated, and whether said replay of said Play Item should be interrupted immediately upon user interaction or not.
The fields **Selection #BSN Offset** until **Selection #(BSN + NOS -1) Offset** represent the reference to the List that is interpreted when the corresponding selection having a number in the range from BSN until BSN+NOS-1 is made.

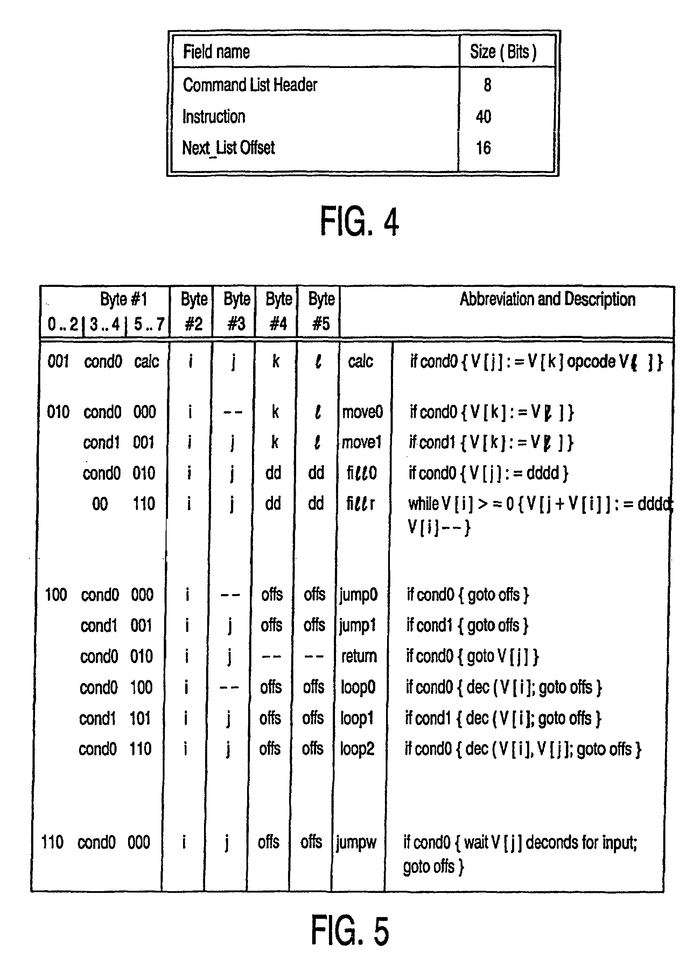

The syntax of the Command List is shown in Figure 4. The semantics of the Command List are as follows:

**Command List Header:** This field identifies the start of a Command List. The value is $20.
**Instruction Field:** This field defines the operations to be carried out by the processor. Possible instructions are set out in Figure 5.
**Next List Offset:** This field defines the offset to the next List to execute or play.

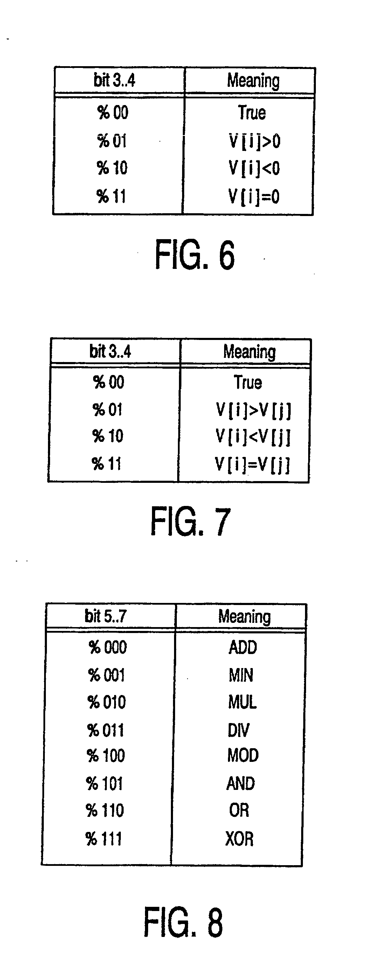

Figure 5 shows an overview of possible instructions for the Instruction Field of a Command List. The first byte of the instruction is an opcode, indicating the type of operation to be performed and the following 4 bytes are operands. In this Figure, the symbols i,j,k,I represent indices to an array of variables. If accidentally a read or write access is attempted to a reserved location of the array, the command is not executed. The symbols dddd represent a 16 bit signed constant. The symbol offs represent an offset of a next Command List. The third and the fourth bit of the opcode can contain a conditional opcode cond0 or cond1. The semantics for cond0 and cond1 are set out in Figure 6 and 7, resp. A binary value of cond0 being equal to 01, 10 and 11 respectively means that the instruction is only performed if the condition $V[i] > 0$, $V[i] < 0$ , $V[i] = 0$ is fulfilled respectively. If cond0 equals to 00 its meaning is TRUE, hence the remaining portion of the instruction is performed unconditionally. Analogously if the value of cond1 is equal to 01, 10 and 11 the instruction is only performed if the condition $V[i] > V[j]$, $V[i] < V[j]$ , $V[i] = V[j]$ is fulfilled. If cond1 equals to 00 its meaning is TRUE, hence the remaining portion of the instruction is performed unconditionally. In the table of Figure 5 there are four main sets of instructions which are denoted by the first three bits of the opcode. A first set having an opcode starting with the bits 001 comprises arithmetical and logical operations wherein $V[k]$ and $V[l]$ are input variables and $V[j]$ is an output variable. The type of calculation is determined by bits 5 to 7 of the opcode as set out in Figure 8. Whether the operation is performed depends on the value of the conditional opcode cond0. In the present embodiment arithmetical operations are addition (ADD), subtraction (MIN), multiplication (MUL), division (DIV) and modulo (MOD). Logical operations are AND, OR and XOR.

The second set has an opcode starting with the bits 010. This set of instructions comprises assignments. The instruction "010 cond0 000" provides for assignment of the value of variable $V[l]$ to variable $V[k]$ provided that condition cond0 is true. Likewise the instruction "010 cond1 001" provides for assignment of the value of the variable $V[l]$ to variable $V[k]$ if condition cond1 is true. The instruction "010 cond0 010" provides for assignment of the value of the constant dddd to variable $V[j]$ if condition cond0 is true. The instruction "010 00 110" results in a block of variables being assigned the value dddd while the variable $V[i]$ greater than or equal to 0. The variable currently being filled is indicated by index $j+V[i]$. After each assignment the variable $V[i]$ is decreased by 1.

The third set comprises goto instructions. This set has an opcode starting with the bits 100. Opcodes "100 cond0 000" and "100 cond0 001" respectively effectuate a jump to the List at address "offs" if cond0 is true and if cond1 is true. Opcodes "100 cond0 010" effectuate a jump to the List at address stored in variable $V[j]$ if cond0 is true. Opcodes "100 cond0 100" and "100 cond1 101" effectuate a jump to the address "offs" and a decrease of the value of variable $V[i]$ by one if respectively cond0 and cond1 are true. The opcode "100 cond0 110" effectuates a jump to the address "offs" and a decrease of the variables $V[i]$ and $V[j]$ by one.

The fourth set, of which the opcode starts with the bits 110, comprises a wait and goto instruction. If this instruction "110 cond0 000" is performed the playback device will wait during $V[j]$ seconds for user input. If no input is received within that time interval the control jumps to the list at address "offs".

Apart from user variables, the command list interpreter can also access system variables. The system variables serve as an application programming interface between a so called virtual machine (VM) which processes the commands and the hardware of the reproducing apparatus. By acting on system variables, the instructions in the Command List can evaluate and/or influence system variables, such as the status of an overlay graphics channel, the setting of the audio channels (mute, mono, stereo, etc.). Additionally the instructions can cause the processor to read other parameters, such as the current disc identification, the current track, the current playing time.

The following table gives an example of possible variables to be controlled by commands in the Command List. The variables are stored in an array of 256 16-bit registers. The array comprises 16 read/write general purpose variables, having variable index 0-15. These variables are not initialized at the start of the Command List. In an embodiment of the apparatus of the invention the value of these variables is maintained when a record carrier is replaced by another record carrier, for example another record carrier belonging to the same album. The array further comprises 240 registers for system variables comprising reserved registers (variable index 16-207), player decoder registers (variable index 208-223), disc related registers (variable index 224-239), Play List related registers (variable index 240-251) and other system related registers (variable index 252-255).

Table 1

| Variable Array | | |
|---|---|---|
| Variable index | Type of register | Description |
| ***User variables*** | | |
| **0..15** | R/W | get / set 16 bit general purpose **variables** |
| | | |
| ***System variables*** | | |
| **16..207** | -- | Reserved |

Table 1 (continued)

| Variable Array | | |
|---|---|---|
| Variable index | Type of register | Description |
| *Apparatus decoder registers* | | |
| **208** | R/W | get / set **OGT_channel** (0..3) status |
| **209** | R/W | get / set **Audio_mixing** (0..3 ) status |
| **210** | R/W | get / set **Audio_stream** (0..3) status |
| **211..223** | -- | reserved |
| *Disc related registers* | | |
| **224** | R/W | get / set **MPEG_PlayingTime** |
| **225** | R/W | get / set **PlayItem_number (PIN)** |
| **226..239** | -- | reserved |
| *Play List related registers* | | |
| **240** | R/W | get / set **List_Offset** |
| **241** | R/W | get / set **Exception_Error List_Offset** |
| **242** | R/W | get / set **User_input** |
| **243..251** | -- | reserved |
| *Other system related registers* | | |
| **252** | R/W | get / set **Timer** |
| **253** | R/W | get / set **Shuffle** |
| **254** | R/W | get / set **NV-RAM_block** |
| **255** | Read Only | get **Player Configuration status flags** |

The VM can control the reproducing apparatus by setting a system variable, and the reproducing apparatus has then to execute controls that would generate the same status. The reproducing apparatus may reflect its status by setting a system variable, so that it can be read out by the VM. Note that a system variable actually corresponds to two different registers, one for read of the status of the reproducing apparatus, and one for giving a command to the reproducing apparatus. When the player is busy executing a register command, then these values could be different.
The system variables comprised in the table above are now described in more detail.

**OGT-channel:** The VM may activate an overlay graphics and text channel by setting this system variable. The VM may further determine whether an overlay graphics and text channel is activated, and if so identify the channel by reading said variable. The meaning of the variable is for example defined by the following table.

Table 2

| OGT_channel | |
|---|---|
| Value | Meaning |
| **-1** | No OGT_channel displayed |
| **i = 0 to 3** | channel i |

**Audio_mixing:** The VM may control the audio mixing status of the reproducing apparatus by setting this variable. The VM may also read this variable to verify the current status. The variable has for example the definition given in table 3.

6

Table 3

| Audio_mixing | |
|---|---|
| Value | Meaning |
| **0** | Audio mute |
| **1** | Left channel only |
| **2** | Right channel only |
| **3** | Stereo |

**Audio_stream:** This variable serves to control and to verify which audio stream is selected. The selection of the audio stream and the value of the variable may for example correspond according to table 4.

Table 4

| Audio_stream | |
|---|---|
| Value | Meaning |
| **0** | No Audio stream selected |
| **1** | Stream 1 |
| **2** | Stream 2 |
| **3** | Stream 1 + Extended Stream for Surround sound |

**User_input:** The VM may enable or disable user input by setting this variable to a first or a second value, e.g. 255 and 254 respectively. If user input is enabled the VM may obtain the last user input by reading the variable. The user input may for example be a selection made by the user out of a plurality of options from offered by a Selection List. Examples of values of this variable are given in table 5.

Table 5        User_Input values

| Read value | User input |
|---|---|
| 0..99 | Numeric input or last selection |
| 100 | Default selection |
| 101 | Next |
| 102 | Previous |
| 103 | Return |
| -- | reserved |
| 254 ($00FE) | User input disabled |
| 255 ($00FF) | User input enabled |

| Write value | meaning |
|---|---|
| 254 ($00FE) | Disable User input |
| 255 ($00FF) | Enable User input |
| else | VOID |

**MPEG_PlayingTime:** The VM may request the time played of the last MPEG stream from the beginning of the stream by reading this variable. In addition the VM may set this variable and so define the time to play for the next Play Item starting from the beginning of the item. If the value set exceeds the Playing Time of the Play Item, then this function may be discarded. If the value is set to 0 then the Play Item may be played until its end.

**PlayItem_nuumber:** The VM can retrieve an identification of the last Play Item which was reproduced by reading this variable. Setting this variable enables the VM to select a Play Item to be played. During play back of a Motion Picture Play Item special playback control as Pause / Play, Fast Forward etc. may be executed by the reproducing apparatus if the User Input is enabled. It is assumed that a Still Picture remains on screen until next PLAY, even during change of a record carrier.

**List_Offset:** Reading this variable provides the address of the current command list. The value can be saved in a user variable for a "go sub" Command List function. This function is the general method to goto an other List. This is not a normal gosub function, but by saving the value, a following Command List can find out the offset of the previous Command List and return back. Control of the apparatus can be transferred to another Command List by assigning the address of that Command List to the variable **List_offset.**

**Exception_Error List_Offset:** This variable may contain the address of a Command List to proceed with in case of a non recoverable or exceptional error ( e.g. divide by 0, or illegal Command ).

**Timer:** The VM may set this variable to a positive value. The apparatus will subsequently decrement the variable at regular time intervals, e.g. each 10th of a second (100ms) down to 0 (zero). The VM may subsequently read the variable to verify how much time has passed since the variable was initialized.

**Shuffle:** The VM may obtain the next value from a shuffle sequence by reading this variable. The VM may also generate a shuffle sequence by subsequently assigning the numbers of the items to be reproduced to this variable.

**NV-RAM_block:** Reading this register provides an identification of a block of user variables which was restored from non-volatile RAM (NV-RAM) at start up. The block is for example identified by a two byte value, wherein the first byte ) indicates the index of the first variable in the block, and the second byte (LSB) the number of variables in the block. Likewise the VM may specify a block of variables to be written to NV-RAM by setting this variable. The player may uniquely allocate an NV-RAM block for each record carrier by using a record carrier identification, or an identification of an album to which the record carrier belongs.

**Player Configuration status flags:** This variable is read only. The bits of the variable serve as flags which indicate the capabilities of the player.

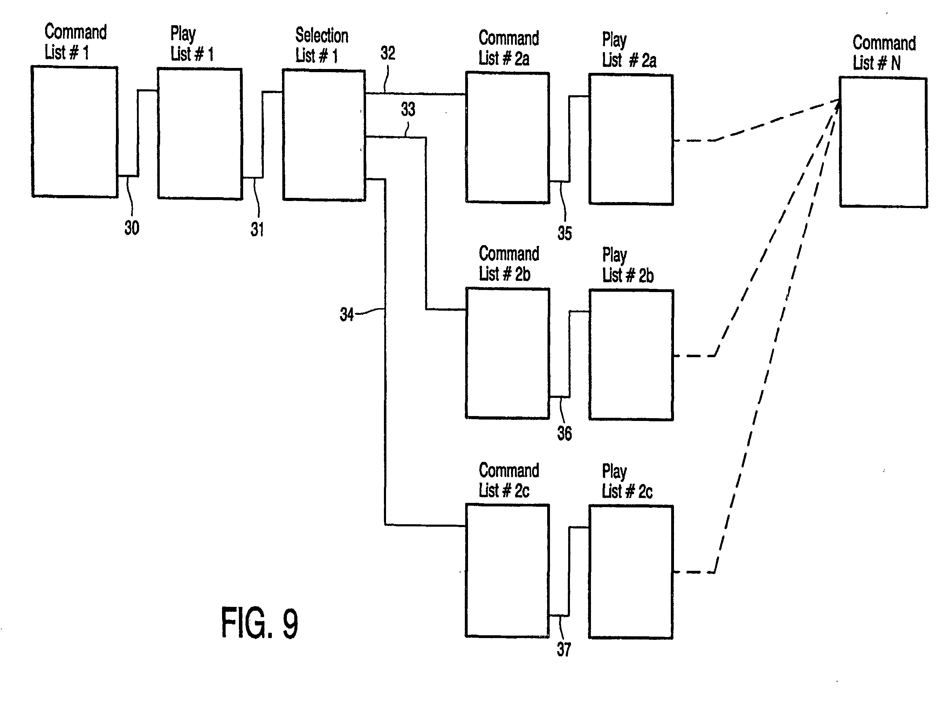

Figure 9 shows an example where Play Lists, Selection Lists and Command Lists control the replay of user data in an English language course. The processor starts interpretation with Command List #1. This Command List effectuates that one or more counters indicating progress of the user are initialized. Values stored in the counters are for example a measure for the knowledge of grammar, for the usage of words, for the number of trials etc. In this example a Command List may comprise a plurality of instructions. In another embodiment each Command List comprises only one instruction, so that in case of a sequence of commands each of the Command Lists contains a pointer to the Command List having the succeeding instruction.

After the counters are initialized the control is passed to the Play List #1 indicated by the value of the pointer 30 in the field Next_List Offset of Command List #1. Upon interpretation of the Play List the processor effectuates that a first English module comprising one or more Play Items (not shown) with audio and/or video data is presented to the user. After this module is finished Selection List #1 which is pointed to (31) by the Next_List Offset of Play List #1 takes over control. This Selection List points to a Play Item (not shown), which presents the user a question about the first English module. The user can respond thereto by making a choice. Dependent on the choice made by the user, control is passed to one of the Command Lists #2a, #2b or #2c via pointers 32, 33 and 34 respectively. The Command Lists evaluate the input of the user, and adapt the scores. The Next_List Offset of the Command Lists refers (35, 36 ,37) to a following Play List #2a, #2b or #2c, which effects the playback of a next English module. This next module can be succeeded by a next Selection List by which a next question is posed to the user. After a plurality of such sessions, comprising presentation of a module and the posing of a question, control is passed to a final Command List #n, which evaluates the history of user input and determines how to proceed the English language course.

Such an evaluation could for example comprise a conditional computation: if (a>0) then

$$R = (a+b)*(c+d)$$

else if (a<0) then

$$R = (a-b)*(c-d)$$

else

$$R = a*c$$

endif
endif.

Herein R is the result of the calculation and a, b, c, and d are variables.

Such an computation may be implemented in a Command List as follows. Presume that the variables a, b, c, d are stored in the variable registers 0, 1, 2 and 3 and that the result R is stored in variable register 6. Registers 4, 5 are used for storing temporary results p, q. The instructions are shown in a mnemonic which corresponds to the definition according to the table in Figure 4. Bits 5 to 7 are represented by the abbreviations defined in the table of Figure 8. The parameters between the brackets correspond to the indices i,j,k,l as shown in Table 4. In this case the commands all belong to the group of conditional calculations.

```
001 01add (0, 4, 0, 1)      "if a>0 then p = a + b"
001 01add (0, 5, 2, 3)      "if a>0 then q = c + d"
001 01mul (0, 6, 4, 5)      "if a>0 then R = p * q"
001 10sub (0, 4, 0, 1)      "if a<0 then p = a - b"
001 10sub (0, 5, 2, 3)      "if a<0 then q = c - d"
001 10mul (0, 6, 4, 5)      "if a<0 then R = p * q"
001 11mul (0, 6, 0, 2)      "if a=0 then R = a * c"
```

Variable control is relatively simple. No jumps are required and the computation can be described with a relatively small number of commands in comparison with a Command List in which only unconditional calculations can be used.

Whilst the invention has been described with reference to preferred embodiments thereof, it is to be understood that these are not limitative examples. Thus, various modifications may become apparent to those skilled in the art, without departing the scope of the invention, as defined by the claims.

**Claims**

1. A method of using a record carrier (1) with an apparatus capable of reproducing user-data under control of control data, said record carrier storing at least video-related user data and control data in digital form, which control data enable playback control of the user data, which control data comprises at least play control data (Play list) which defines user data items which are playable, at least selection control data (Selection list) for enabling the user to select and control reproduction of user data and at least variable control data (Command list) comprising at least one instruction for an arithmetical operation on user and system variables, **characterized in that** the at least one instruction comprises a data field used to select one from plural different logical tests in said apparatus the outcome of which selected test controls the execution of the arithmetical operation of said apparatus.

2. A method according to claim 1, **characterized in that**, the instructions are embedded in Command Lists in an instruction field, the Command Lists further comprise a Command List Header which precedes the instruction field and an unconditional goto which succeeds the instruction field, and which refers to a next list.

3. A method according to claim 2, **characterized in that** each Command List comprises only one instruction apart from the unconditional goto.

4. A method according to claim 2 or 3, **characterized in that** the play control data is embedded in Play Lists, which Play Lists at least comprise a Play List Header as a first item and at least one Play Item representing playable user-data and at least one reference to a further List, and **in that** the selection control data is embedded in Selection Lists, which Selection Lists at least comprise a Selection List Header, at least one reference corresponding to a user selection, the Headers being mutually different, and wherein at least one Command List contains a reference to a Play List or a Selection List.

5. An apparatus (3) capable of reproducing user-data under control of control data, the user data and the control data being stored in digital form on a record carrier (1), which user data comprises at least video data, which control data comprises at least play control data (Play List) which defines user data items which are playable and at least selection control data (Selection List) for enabling the user to select and control reproduction of user data items, which control data further comprise variable control data (Command List) comprising at least one instruction for an arithmetical operation on user and system variables, which apparatus is provided with control means comprising a processor (15) controllable by said control data, **characterized in that** the apparatus (3) is adapted to be controlled by variable control data (Command List) wherein the at least one instruction comprises a data field used to select one from plural different logical tests in said apparatus the outcome of which selected test controls the execution of the arithmetical operation of the apparatus.

6. Apparatus according to claim 5, **characterized in that** the control means comprises a single interpreter which is adapted to process the play control data (Play List), the selection control data (Selection List) and the variable control data (Command List) sequentially.

7. Method of reproducing user-data under control of control data, according to which method the user data and the control data are read from a record carrier (1) on which these data are stored in digital form, which user data comprises at least video data, which control data comprises play control data (Play List), selection control data (Selection List) and variable control data (Command List), according to which method user data items are played under control of the play control data (Play List), according to which method the selection control data (Selection List) enables the user to select and control reproduction of user data items, according to which method the variable control data (Command List) comprises at least one instruction for an arithmetical operation on user and system variables, **characterized in that** the at least one instruction comprises a data field used to select one from plural different logical tests the outcome of which selected test controls the execution of the arithmetical operation.

**Patentansprüche**

1. Verfahren zur Verwendung eines Aufzeichnungsträgers (1) mit einem Gerät, das imstande ist, Benutzerdaten unter der Steuerung durch Steuerungsdaten wiederzugeben, wobei dieser Aufzeichnungsträger zumindest videoverwandte Benutzerdaten und Steuerungsdaten in digitaler Form speichert, welche Steuerungsdaten eine Steuerung des Abspielens der Benutzerdaten ermöglichen, welche Steuerungsdaten zumindest Abspielsteuerungsdaten (Play List) umfassen, die Benutzerdaten-Items definieren, die abspielbar sind, sowie zumindest Auswahlsteuerungsdaten (Selection List) umfassen, um den Benutzer zu befähigen, die Wiedergabe von Benutzerdaten auszuwählen und zu steuern, und zumindest variable Steuerungsdaten (Command List) umfassen, die zumindest einen Befehl für eine Rechenoperation an Benutzer- und Systemvariablen umfassen, **dadurch gekennzeichnet, dass** der zumindest eine Befehl ein Datenfeld umfasst, das zum Auswählen eines aus mehreren verschiedenen logischen Tests in dem genannten Gerät verwendet wird, wobei das Ergebnis des ausgewählten Tests die Ausführung der Rechenoperation des genannten Gerätes steuert.

2. Verfahren nach Anspruch 1, **dadurch gekennzeichnet, dass** die Befehle in Command Lists in einem Befehlsfeld eingebettet sind, die Command Lists weiterhin einen Command List Header umfassen, der dem Befehlsfeld vorausgeht, und eine unbedingte Sprunganweisung, die auf das Befehlsfeld folgt und die auf eine nächste Liste verweist.

3. Verfahren nach Anspruch 2, **dadurch gekennzeichnet, dass** jede Command List außer der unbedingten Sprunganweisung nur einen Befehl umfasst.

4. Verfahren nach Anspruch 2 oder 3, **dadurch gekennzeichnet, dass** die Abspielsteuerungsdaten in Play Lists eingebettet sind, welche Play Lists zumindest einen Play List Header als erstes Item und zumindest ein abspielbare Benutzerdaten repräsentierendes Play Item und zumindest einen Verweis auf eine weitere Liste umfassen, und dass die Auswahlsteuerungsdaten in Selection Lists eingebettet sind, welche Selection Lists zumindest einen Selection List Header umfassen, wobei zumindest ein Verweis einer Benutzerauswahl entspricht, wobei die Header sich voneinander unterscheiden und wobei zumindest eine Command List einen Verweis auf eine Play List oder eine Selection List enthält.

5. Gerät (3), das imstande ist, Benutzerdaten unter der Steuerung durch Steuerungsdaten wiederzugeben, wobei die Benutzerdaten und die Steuerungsdaten in digitaler Form auf einem Aufzeichnungsträger ( 1 ) gespeichert sind, welche Benutzerdaten zumindest Videodaten umfassen, welche Steuerungsdaten zumindest Abspielsteuerungsdaten (Play List) umfassen, die Benutzerdaten-Items definieren, die abspielbar sind, und zumindest Auswahlsteuerungsdaten (Selection List) umfassen, um den Benutzer zu befähigen, die Wiedergabe von Benutzerdaten auszuwählen und zu steuern, welche Steuerungsdaten weiterhin variable Steuerungsdaten (Command List) umfassen, die zumindest einen Befehl für eine Rechenoperation an Benutzer- und Systemvariablen umfassen, welches Gerät mit Steuerungsmitteln versehen ist, die einen von den genannten Steuerungsdaten steuerbaren Prozessor (15) umfassen, **dadurch gekennzeichnet, dass** das Gerät (3) ausgebildet ist, um von variablen Steuerungsdaten (Command List) gesteuert zu werden, in denen der zumindest eine Befehl ein Datenfeld umfasst, das zum Auswählen eines aus mehreren verschiedenen logischen Tests in dem genannten Gerät verwendet wird, wobei das Ergebnis des ausgewählten Tests die Ausführung der Rechenoperation des Gerätes steuert.

**6.** Gerät nach Anspruch 5, **dadurch gekennzeichnet, dass** die Steuerungsmittel einen einzelnen Interpreter umfassen, der zum sequentiellen Verarbeiten der Abspielsteuerungsdaten (Play List), der Auswahlsteuerungsdaten (Selection List) und der variablen Steuerungsdaten (Command List) ausgebildet ist.

**7.** Verfahren zum Wiedergeben von Benutzerdaten unter der Steuerung durch Steuerungsdaten, nach welchem Verfahren die Benutzerdaten und die Steuerungsdaten aus einem Aufzeichnungsträger (1), auf dem diese Daten in digitaler Form gespeichert sind, ausgelesen werden, welche Benutzerdaten zumindest Videodaten umfassen, welche Steuerungsdaten Abspielsteuerungsdaten (Play List), Auswahlsteuerungsdaten (Selection List) und variable Steuerungsdaten (Command List) umfassen, gemäß welchem Verfahren Benutzerdaten-Items unter der Steuerung durch die Abspielsteuerungsdaten (Play List) abgespielt werden, gemäß welchem Verfahren die Auswahlsteuerungsdaten (Selection List) den Benutzer befähigen, die Wiedergabe von Benutzerdaten-Items auszuwählen und zu steuern, gemäß welchem Verfahren die variablem Steuerungsdaten (Command List) zumindest einen Befehl für eine Rechenoperation an Benutzer- und Systemvariablen umfassen, **dadurch gekennzeichnet, dass** der zumindest eine Befehl ein Datenfeld umfasst, das zum Auswählen eines aus mehreren verschiedenen logischen Tests verwendet wird, wobei das Ergebnis des ausgewählten Tests die Ausführung der Rechenoperation steuert.

## Revendications

**1.** Procédé d'utilisation d'un support d'enregistrement (1) avec un appareil en mesure de reproduire des données utilisateur sous le contrôle de données de commande, ledit support d'enregistrement stockant au moins des données utilisateur liées à un contenu vidéo et des données de commande sous forme numérique, lesquelles données de commande permettent la commande de la lecture des données utilisateur, lesquelles données de commande comprennent au moins des données de commande de lecture (liste de lecture) qui définissent des éléments de données utilisateur pouvant être joués, au moins des données de commande de sélection (liste de sélection) pour permettre à l'utilisateur de sélectionner et de commander la reproduction de données utilisateur, et au moins des données de commande de variables (listede commandes) comprenant au moins une instruction pour une opération arithmétique sur des variables utilisateur et système, **caractérisé en ce qu'**au moins une instruction comprend un champ de données utilisé pour sélectionner un test parmi plusieurs tests logiques différents dans ledit appareil, le résultat du test sélectionné commandant l'exécution de l'opération arithmétique dudit appareil.

**2.** Procédé suivant la revendication 1, **caractérisé en ce que** les instructions sont intégrées dans des listes de commandes dans un champ d'instructions, les listes de commandes comprenant en outre un en-tête de liste de commandes qui précède le champ d'instructions et un go to inconditionnel qui suit le champ d'instructions, et qui fait référence à une liste suivante.

**3.** Procédé suivant la revendication 2, **caractérisé en ce que** chaque liste de commandes ne comprend qu'une seule instruction, en-dehors du goto inconditionnel.

**4.** Procédé suivant la revendication 2 ou 3, **caractérisé en ce que** les données de commande de lecture sont intégrées dans des listes de lecture, lesquelles listes de lecture comprennent au moins un en-tête de liste de lecture comme premier élément, au moins un élément de lecture représentant des données utilisateur pouvant être jouées, et au moins une référence à une liste supplémentaire, et **en ce que** les données de commande de sélection sont intégrées dans des listes de sélection, lesquelles listes de sélection comprennent au moins un en-tête de liste de sélection, au moins une référence correspondant à une sélection utilisateur, les en-têtes étant différents les uns des autres, et au moins une liste de commandes contenant une référence à une liste de lecture ou à une liste de sélection.

**5.** Appareil (3) en mesure de reproduire des données utilisateur sous le contrôle de données de commande, les données utilisateur et les données de commande étant stockées sous forme numérique sur un support d'enregistrement (1), lesquelles données utilisateur comprennent au moins des données vidéo, lesquelles données de commande comprennent au moins des données de commande de lecture (liste de lecture) qui définissent des éléments de données utilisateur pouvant être joués, et au moins des données de commande de sélection (liste de sélection) pour permettre à l'utilisateur de sélectionner et de commander la reproduction d'éléments de données utilisateur, lesquelles données de commande comprennent en outre des données de commande de variables (listede commandes) comprenant au moins une instruction pour une opération arithmétique sur des variables utilisateur et système, lequel appareil est doté de moyens de commande comprenant un processeur (15) pouvant être commandé par lesdites données de commande, **caractérisé en ce que** l'appareil (3) est apte à être commandé par des données de commande de variables (liste de commandes ), la au moins une instruction comprenant un champ de données utilisé pour sélectionner un test parmi plusieurs tests logiques différents dans ledit appareil, le résultat du test sélectionné commandant l'exécution de l'opération arithmétique dudit appareil.

6. Appareil suivant la revendication 5, **caractérisé en ce que** les moyens de commande comprennent un interpréteur unique apte à traiter les données de commande de lecture (liste de lecture), les données de commande de sélection (liste de sélection), et les données de commande de variables (listede commandes ) de manière séquentielle.

7. Procédé de reproduction de données utilisateur sous le contrôle de données de commande, procédé suivant lequel les données utilisateur et les données de commande sont lues à partir d'un support d'enregistrement (1) sur lequel ces données sont stockées sous forme numérique, lesquelles données utilisateur comprennent au moins des données vidéo, lesquelles données de commande comprennent des données de commande de lecture (liste de lecture), des données de commande de sélection (liste de sélection) et des données de commande de variables (listede commandes), procédé suivant lequel des éléments de données utilisateur sont joués sous le contrôle de données de commande de lecture (liste de lecture), suivant lequel les données de commande de sélection (liste de sélection) permettent à l'utilisateur de sélectionner et de commander la reproduction d'éléments de données utilisateur, et suivant lequel les données de commande de variables (listede commandes ) comprennent au moins une instruction pour une opération arithmétique sur des variables utilisateur et système, **caractérisé en ce que** la au moins une instruction comprend un champ de données utilisé pour sélectionner un test parmi plusieurs tests logiques différents, le résultat du test sélectionné commandant l'exécution de l'opération arithmétique.

FIG. 1

| Field name | Size ( Bits ) |
| --- | --- |
| Play List Header | 8 |
| Number Of Items ( NOI ) | 8 |
| List ID | 16 |
| Previous List Offset | 16 |
| Next List Offset | 16 |
| Return List Offset | 16 |
| Playing Time | 16 |
| Play Item Wait Time | 8 |
| Auto Pause Wait Time | 8 |
| Play Item #1 Number | 16 |
| • | |
| • | |
| Play Item #NOI Number | 16 |

# FIG. 2

| Field name | Size ( Bits ) |
|---|---|
| Selection List Header | 8 |
| Flags | 8 |
| Number Of Selections ( NOS ) | 8 |
| Base Of Selection Number ( BSN ) | 8 |
| List ID | 16 |
| Previous List Offset | 16 |
| Next List Offset | 16 |
| Return List Offset | 16 |
| Default List Offset | 16 |
| Time - out List Offset | 16 |
| Wait Time for Time - out | 8 |
| Loop Count & Jump Timing | 8 |
| Play-Item Number | 16 |
| Selection #BSN Offset | 16 |
| • | |
| • | |
| Selection #(BSN + NOS - 1) Offset | 16 |

# FIG. 3

| Field name | Size ( Bits ) |
|---|---|
| Command List Header | 8 |
| Instruction | 40 |
| Next_List Offset | 16 |

# FIG. 4

| Byte #1 0..2 | 3..4 | 5..7 | Byte #2 | Byte #3 | Byte #4 | Byte #5 | | Abbreviation and Description |
|---|---|---|---|---|---|---|---|---|
| 001 | cond0 | calc | i | j | k | $\ell$ | calc | if cond0 { V [ j ] : = V [ k ] opcode V [ $\ell$ ] } |
| 010 | cond0 | 000 | i | - - | k | $\ell$ | move0 | if cond0 { V [ k ] : = V [ $\ell$ ] } |
| | cond1 | 001 | i | j | k | $\ell$ | move1 | if cond1 { V [ k ] : = V [ $\ell$ ] } |
| | cond0 | 010 | i | j | dd | dd | fi$\ell\ell$0 | if cond0 { V [ j ] : = dddd } |
| | 00 | 110 | i | j | dd | dd | fi$\ell\ell$r | while V [ i ] > = 0 { V [ j + V [ i ] ] : = dddd; V [ i ] - - } |
| 100 | cond0 | 000 | i | - - | offs | offs | jump0 | if cond0 { goto offs } |
| | cond1 | 001 | i | j | offs | offs | jump1 | if cond1 { goto offs } |
| | cond0 | 010 | i | j | - - | - - | return | if cond0 { goto V [ j ] } |
| | cond0 | 100 | i | - - | offs | offs | loop0 | if cond0 { dec ( V [ i ]; goto offs } |
| | cond1 | 101 | i | j | offs | offs | loop1 | if cond1 { dec ( V [ i ]; goto offs } |
| | cond0 | 110 | i | j | offs | offs | loop2 | if cond0 { dec ( V [ i ], V [ j ]; goto offs } |
| 110 | cond0 | 000 | i | j | offs | offs | jumpw | if cond0 { wait V [ j ] deconds for input; goto offs } |

# FIG. 5

| bit 3..4 | Meaning |
|----------|---------|
| % 00 | True |
| % 01 | V [ i ]>0 |
| % 10 | V [ i ]<0 |
| % 11 | V [ i ]=0 |

# FIG. 6

| bit 3..4 | Meaning |
|----------|---------|
| % 00 | True |
| % 01 | V [ i ]>V [ j ] |
| % 10 | V [ i ]<V [ j ] |
| % 11 | V [ i ]=V [ j ] |

# FIG. 7

| bit 5..7 | Meaning |
|----------|---------|
| % 000 | ADD |
| % 001 | MIN |
| % 010 | MUL |
| % 011 | DIV |
| % 100 | MOD |
| % 101 | AND |
| % 110 | OR |
| % 111 | XOR |

# FIG. 8

FIG. 9